# EUROPEAN PATENT APPLICATION

(11) **EP 1 935 848 A1**
(43) Date of publication of application: **25.06.2008**
(21) Application number: 06256467.9
(22) Date of filing: 20.12.2006
(51) Int. Cl.: C01B 3/48

(54) **Process for producing synthesis gas**

(71) Applicant: BP EXPLORATION OPERATING COMPANY LIMITED, Sunbury-on-Thames, Middlesex TW16 7BP (GB)
(72) Inventor: The designation of the inventor has not yet been filed
(74) Representative: De Kezel, Eric

(57) **Abstract**

The present invention relates to the production of synthesis gas, CO2 and hydrogen, from a hydrocarbon feedstock, such as a hydrocarbon. After water-gas shift reaction of at least a part of the synthesis gas, this mixture is separated in carbon dioxide and hydrogen. The hydrogen is used as heat input for the synthesis gas generator. The synthesis gas is used in a Fischer-Tropsch process.

## Description

The present invention relates to the production of synthesis gas, CO2 and hydrogen, from a hydrocarbon feedstock, such as a hydrocarbon. More specifically, the present invention relates to the production from a hydrocarbon feedstock of:
- synthesis gas which can then be converted into liquids, e.g. hydrocarbons and/or alcohol(s),
- hydrogen for energy generation (e.g. power and heat generation and fuel cells) and/or chemical use, and
- CO2 for hydrocarbon improved recovery from wells with optional CO2 sequestration in the wells.

The present invention provides an improved process for manufacturing synthesis gas from a hydrocarbon feedstock, preferably from natural gas. Natural gas generally refers to rarefied or gaseous hydrocarbons found in the earth. Non-combustible natural gases occurring in the earth, such as carbon dioxide,-helium and nitrogen are generally referred to by their proper chemical names. Often, however, non-combustible gases are found in combination with combustible gases and the mixture is referred to generally as "natural gas" without any attempt to distinguish between combustible and non-combustible gases. See Pruitt, "Mineral Terms-Some Problems in Their Use and Definition", Rocky Mt. Min. L. Rev. 1,16 (1966).

Natural gas is often present in remote locations where it is not economical to develop these reserves due to the absence of a local market for the gas or the high cost of processing and transporting the gas to distant markets.

The technologies currently employed to move natural gas to remote markets generally include, but are not limited to, pipelines, the cryogenic manufacture of liquefied natural gas (LNG), and the production of Gas to Liquids (GTL) products.

Each of these technologies feature benefits and incur penalties, which can make one technology preferred over another for any given commercial environment.

Traditional GTL products include, but are not limited to, methanol, acetic acid, olefins, dimethyl ether, dimethoxy methane, polydimethoxy methane, urea, ammonia, fertilizer and Fischer Tropsch (FT) reaction products. The FT reaction produces mostly hydrocarbon products of varying carbon chain length, useful for producing lower boiling alkanes, alkenes, naphtha, distillates useful as jet and diesel fuel and furnace oil, and lubricating oil and wax base stocks.

GTL products, such as those produced from FT synthesis, including FT diesel fuels, have chemical and physical properties and environmental qualities that permit these products to most easily benefit from traditional energy infrastructure, including fuel storage and dispensing equipment. Additionally, fuel consuming equipment as automotive/airplane engines as well as other utility, transportation and domestic power systems are currently more receptive or adaptable to the use of GTL products.

The broader implementation of GTL technology commercially, however, has been limited by the high capital cost and operational efficiency of the GTL manufacturing plants. Moreover, the largest single component of capital cost and the single largest contributor to operational efficiency (or inefficiency) has generally been the synthesis gas manufacturing units at the GTL manufacturing plant.

Therefore, there is a great need in industry for improved synthesis gas technology that is cost effective and operationally efficient.

For purposes of the present invention, GTL products may be obtained directly or via synthesis gas routes. The indirect synthesis gas routes involve the production of synthesis gas comprising hydrogen and carbon monoxide as an intermediate product whereas the direct routes shall be construed as covering all others.

The most common commercial methods for producing synthesis gas from natural gas are steam reforming (SR), auto-thermal reforming, gas heated reforming, partial oxidation, and combinations thereof.

Steam reforming (SR), is where steam and natural gas react at high temperatures and moderate pressures over a catalyst, e.g. a reduced nickel-containing catalyst, to produce synthesis gas and the heat for the reaction is externally provided to.the process.

Steam reforming, for the preparation of synthesis gas, may take place in a single-step, wherein all of the energy consuming reforming reactions are accomplished in a single tubular steam reformer. Or in a two-step reforming process wherein the primary reforming in a tubular steam reformer is combined with an oxygen-containing gas-fired secondary reforming step.

As an alternative, auto-thermal reforming, wherein a stand-alone, oxygen-containing gas-fired reformer produces synthesis gas having a hydrogen deficiency followed by the downstream removal of carbon dioxide to restore the desired ratio of hydrogen to carbon oxide, results in a simplified process scheme. Catalytic auto-thermal reforming (ATR) of hydrocarbon fuels to generate synthesis gas, uses methane and/or liquid hydrocarbons as a reagent that undergoes a reaction with oxygen in a single reactor. The ATR process can be thought of as the combination of an exothermic combustion of hydrocarbons together with the endothermic reforming of the said combustion products; hence the process is extremely efficient in terms of energy, since the heat produced from the catalytic partial oxidation stage can be transferred directly to the steam reforming reaction in situ. Thus, this reactor is extremely heat efficient. Furthermore, the ATR process is capable of using heavy hydrocarbons such as gasoline and diesel.

Gas heated reforming consists of two reactors, a gas heated reformer reactor and an autothermal reformer reactor. Steam and natural gas are fed to the gas-heated reformer where a portion of the natural gas reacts, over catalyst, to form synthesis gas. This mixture of unreacted natural gas and synthesis gas is then fed to the autothermal reformer, along with oxygen, where the remaining natural gas is converted to synthesis gas. The hot synthesis gas stream exiting the autothermal reformer is then routed back to the gas reformer to provide the heat of reaction necessary for the gas-heated reformer.

Partial oxidation generally processes steam, natural gas and oxygen through a specialized burner, whereby a substantial portion of the methane is combusted at high temperatures to produce synthesis gas. Unlike autothermal reforming, no catalyst is present in the partial oxidation reactor.

Autothermal reforming, gas heated reforming, and partial oxidation all require an internal natural gas oxidation step where hydrocarbon is partially oxidized, generally in the presence of less than 60 mole % of the stoichiometric amount of oxygen necessary to fully oxidize natural gas to carbon dioxide and water. In each case, the hydrocarbon oxidation step results in a measurable portion of the hydrocarbon being converted into carbon dioxide. Carbon dioxide formation reduces the overall thermal efficiency of the GTL process resulting in lower product yields.

The natural gas oxidation step, at high temperatures, can also lead to the formation of coke, soot, and coke and soot precursors that deactivate the synthesis gas catalyst, increase reactor pressure drop, and/or cause the synthesis gas reactors to plug.

Steam reforming converts natural gas to synthesis gas in the presence of steam at elevated temperatures, without the use of oxygen, but by other means of external heat input. Since the steam reforming reaction itself does not include internal oxidation or partial oxidation, substantially all of the energy required to facilitate the reaction must be supplied from an external source. These external sources generally include high reactor feed preheat temperatures supplemented by heat input supplied externally by the burning of carbonaceous fuel. In each case, the combustion products from the external heat supplied (water and dilute carbon dioxide) are released to the atmosphere and are not converted to s synthesis gas thus presenting a primary environmental concern.

The steam reforming reaction can also result in the formation of a synthesis gas having a higher hydrogen to carbon monoxide ratio than is desirable for certain GTL commercial uses. Such steam reforming processes often necessitate installation of equipment to remove excessive hydrogen prior to any downstream conversion steps or, after downstream conversion steps, result in unconverted hydrogen, carbon dioxide, light hydrocarbon and unrecovered synthesis gas being recycled within the process or consumed as fuel.

The present invention sets to overcome these and other disadvantages known in the art.

Therefore, the present invention is directed to a process for producing synthesis gas comprising the steps of:
1. reacting a hydrocarbon feedstock, preferably natural gas, in at least one synthesis gas generator(s), using at least one external heat input to said synthesis gas generator(s) to produce a main stream of synthesis gas,
   characterised in that
2. at least part of the main stream of synthesis gas from step 1 is subjected to a water-gas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one of the synthesis gas generator(s) of step 1.

The present invention further relates to a process for upgrading an existing synthesis gas plant, comprising the steps of:
1. reacting a hydrocarbon feedstock, preferably natural gas, in at least one synthesis gas generator(s), using at least one external heat input to said synthesis gas generator(s) to produce a main stream of synthesis gas,
   characterised in that
2. at least part of the main stream of synthesis gas from step 1 is subjected to a water-gas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one of the synthesis gas generator(s) of step 1.

According to the present invention, the hydrocarbon feedstock used for syngas generation is preferably a carbonaceous material, for example biomass, plastic, naphtha, refinery bottoms, crude syngas (from underground coal gasification or biomass gasification), smelter off gas, municipal waste, coal, and/or natural gas, with coal and natural gas being the preferred sources, and natural gas being the most preferable source.

Natural gas commonly contains a range of hydrocarbons (e.g. C1-C3 alkanes), in which methane predominates. In addition to this, natural gas will usually contain nitrogen, carbon dioxide and sulphur compounds. Preferably the nitrogen content of the feedstock is less than 40 wt %, more preferably less than 10 wt % and most preferably less than 1 wt %.

According to a preferred embodiment of the present invention the hydrocarbon feedstock may either comprise a single feedstock, or a plurality of independent feedstocks.

According to the present invention, the said hydrocarbon feedstock(s) is first fed into a least one synthesis gas generator(s), having an external heat input, in order to produce a stream comprising essentially carbon oxide(s) and hydrogen (commonly known as synthesis gas) as well as water, traces of unconverted hydrocarbons, nitrogen and inert gas.

Suitable "synthesis gas generation methods" include, but are not limited to, steam reforming (SR), compact reforming (CR), partial oxidation of hydrocarbons (POX), advanced gas heated reforming (AGHR), microchannel reforming, plasma reforming, autothermal reforming (ATR) and all combinations thereof (regardless of whether the said synthesis gas generation methods are operated in series or in parallel).

Synthesis gas generation methods used for producing mixtures of carbon oxide(s) and hydrogen (synthesis gas), in one or more synthesis gas generator(s), are well known. Each of the aforementioned methods has its advantages and disadvantages, and in practice the choice of using a one particular reforming process over another is dictated by economic and available feed stream considerations, as well as obtaining the desired mole ratio of H2:CO in the feedstock resulting from the reforming reaction. A discussion of the available synthesis gas production technologies is provided in both "Hydrocarbon Processing" V78, N.4, 87-90, 92-93 (April 1999) and "Petrole et Techniques", N. 415, 86-93 (July-August 1998), and are hereby incorporated by reference.

Processes for obtaining the synthesis gas by catalytic partial oxidation of hydrocarbons (as mentioned above) in a microstructured reactor are exemplified in "IMRET 3: Proceedings of the Third International Conference on Microreaction Technology", Editor W Ehrfeld, Springer Verlag, 1999, pages 187-196. Alternatively, the synthesis gas may be obtained by short contact time catalytic partial oxidation of hydrocarbonaceous feedstocks as described in EP 0303438.

The synthesis gas can also be obtained via a "Compact Reformer" process as described in "Hydrocarbon Engineering", 2000, 5, (5), 67-69; "Hydrocarbon Processing", 79/9, 34 (September 2000); "Today's Refinery", 15/8, 9 (August 2000); WO 99/02254; and WO 200023689.

According to a preferred embodiment of the present invention, the synthesis gas is generated via at least one steam reforming apparatus (e.g. a steam methane reformer). The steam reforming apparatus configuration is preferably used together with at least one other suitable synthesis gas generator (e.g. an auto-thermal reformer or a partial oxidation apparatus), wherein the said generators are preferably connected in series.

The steam reforming reaction is highly endothermic in nature. Hence, the reaction is commonly catalysed within the tubes of a reformer furnace. When natural gas is chosen as the hydrocarbon feedstock, the endothermic reaction heat that is needed is supplied by burning a fuel (e.g. additional amounts of natural gas or hydrogen). Simultaneous to the steam reforming reaction, the water/gas shift reaction also takes place within the reactor. Since sulphur is a known poison towards the typical catalysts required for the reaction within the steam reformer, the chosen hydrocarbon feedstock is preferably de-sulphurised prior to entering the said reformer.

Additionally, the steam reformer requires a high steam to carbon ratio to prevent carbon from being deposited on the catalyst, and also to ensure high conversion to carbon monoxide, and so the preferred molar ratio of steam to carbon (i.e. the carbon that is present as hydrocarbons) is between 1 and 2.5, preferably between 1.2 and 2 and most preferably between 1.4 and 1.8.

According to another embodiment of the present invention the steam reforming apparatus employed is a compact reformer. The said compact reformer integrates preheating, steam reforming and waste process heat recovery in a single process compact unit. The reformer design typically resembles a conventional shell-and-tube heat exchanger that is compact when compared to, for example, a conventional steam methane reformer design configuration. The steam reforming reactions occur within the tubes of the said reactor, which are filled with conventional catalyst. Heat for the endothermic steam reforming reactions is provided shellside, where the tubes are heated by combustion of a fuel/air mixture in amongst flames. Heat transfer occurs more efficiently in what is described as a highly countercurrent device. Preferably, the shell side combustion zone also is at elevated pressure. As such elevated pressure is believed to contribute to a more-efficient convective heat transfer to the tubes.

Typically, for commercial synthesis gas production, the pressure at which the synthesis gas is produced ranges from approximately 1 to 100 BAR and preferably from 15 to 55 BAR; and the temperatures at which the synthesis gas exits the final reformer ranges from approximately 650 DEG C. to 1100 DEG C. Since, the high temperatures are necessary in order to produce a favourable equilibrium for syngas production, and to avoid metallurgy problems associated with carbon dusting.

According to the present invention, at least part of the synthesis gas stream resulting from the synthesis gas generator(s) is then separated, by using suitable means, from the said main stream to form a corresponding sub-stream consisting essentially of synthesis gas.

Following the above separation, an independent water feed is added to at least a part of the said sub-steam, and the resulting mixture is subjected to a water gas-shift reaction step, in order to convert the majority of the CO present, into a stream comprising CO2 and H2. The said water gas-shift reaction step is preferably operated in one, or more, reactors (which are preferably connected in series) at a pressure of between 10 and 60 BAR and at a temperature of between 190 and 500 DEG C.

The said sub-stream, comprising CO2 and H2, is then further separated into a first stream comprising essentially CO2 and a second stream comprising essentially H2.

It should be noted that both of the aforementioned separations are preferably performed in such a way, so as to benefit in terms of efficiency, by the use of a simple, yet effective, separation method known to those skilled in the art, for example, a "membrane separation method". Such membrane technologies can be found in 'Purification and Recovery Options for Gasification' D. J. Kubek, E. Polla, F. P. Wilcher, UOP, 1996, and are hereby incorporated by reference.

Alternatively, the said CO2 rich stream (the first stream) may be recovered by any suitable method(s) known to those skilled in the art, for example, by reacting with amines; performing a methanol wash (i.e. the RECTISOL process) and/or by using hot potassium carbonate (e.g. the BENFIELD process).

A key advantage of separating the sub-stream into a CO2 rich stream a H2 rich second stream is that at least part, preferably all, of the carbon dioxide recovered in step 3, may then advantageously be used for chemical use and/or sequestration.

Hence, in one embodiment of the present invention the majority of the CO2 that is produced, separated and recovered according to the present invention, is utilised in an environmentally efficient manner as it is sequestered and contained and thereby not released into the atmosphere.

Preferably this is achieved by feeding the carbon dioxide into an oil and/or gas well, which ensures that the carbon dioxide is contained and not released into the atmosphere, while simultaneously enabling improved extraction of oil and/or gas thereof.

Prior to sequestration, the carbon dioxide is preferably dried to prevent potential corrosion problems. This is typically achieved by cooling the wet carbon dioxide stream to ambient temperature, typically below 50°C, preferably below 40°C, and feeding it to a water separator, in which the water condenses and a stream of dry carbon dioxide is produced. The condensed water can optionally be re-used in the process described by the present invention, for example, as part of the aforementioned independent water feed for the water-gas-shift reaction of the synthesis gas sub-stream.

Since the level of carbon dioxide present in the atmosphere today is a well documented global environmental concern (primarily because carbon dioxide is considered to be the most prominent of all the 'greenhouse gases', and therefore one of the main pollutants in the present atmosphere), it is of global interest to make every effort to reduce the amount of CO2 released into the atmosphere to a minimum. Thus, the CO2 separation (and optional sequestration) as described hereinabove, provides the present process with a major advantage when compared to other processes in the field. Namely that the CO2 emissions produced during synthesis gas generation have been effectively negated.

Optionally the CO2 emissions of the overall process can be further reduced by sequestrating the CO2 generated by the use of fuel for the said synthesis gas generator(s).

According to the present invention, there is also a key recovery of the separated H2 rich stream (the second stream produced during the latter separation), which is advantageously used as - at least a part of, preferably all of - the fuel for the furnace of one, or more, of the said synthesis gas generator(s) of step 1. Thus the process of the present invention provides a substantially pure hydrogen source as a fuel for providing the energy necessary to initiate and sustain the aforementioned synthesis gas generation reaction(s).

This key step of the present invention, not only further supports the aforementioned advantage of negating the overall CO2 emissions associated with the present invention (i.e. using H2 as the fuel to power the furnace), but it also leads to many more advantages, namely that the process is self-fuelling and therefore accrues numerous economic advantageous when compared to other processes in the field. Thus, the synthesis gas generation process in accordance with the present invention can be operated in such a manner so as to manufacture its own hydrogen fuel requirements. In this manner, the present invention minimizes or better eliminates any need for externally supplied hydrogen.

According to another embodiment of the present invention the separated H2 may be used for a number of different processes. For example when an ATR is employed as part of the synthesis gas generation system, the hydrogen may be used as fuel to pre-heat the feed entering into the said ATR(s). The hydrogen may also be used in various other processes, which are hereby incorporated, however they do not form preferred embodiments of the present invention.

The applicants have unexpectedly found that by performing steps 2, 3 and 4 of the present invention, whereby the said sub-stream is first subjected to a water-gas-shift reaction, the resulting CO2 and H2 stream is subsequently separated and the said H2 rich stream is used as an external heat input for at least one of the syngas generator(s), the following effects and/or advantages may be accrued:
- Hydrogen is used to power the syngas generator(s), thus significantly reducing the CO2 emissions of the said syngas generator(s).
- The CO2 emissions of the overall process are significantly reduced, rendering the whole process a "near-zero" CO2 emitter.
- The hydrogen separated and recovered may be used in any one of a number of different downstream processes.

The present invention further relates to the use of synthesis gas in a Fischer-Tropsch process for conversion into hydrocarbon liquids, wherein the synthesis gas is obtained according to the following steps:
1. reacting a hydrocarbon feedstock, preferably natural gas, in at least one synthesis gas generator(s), using at least one external heat input to said synthesis gas generator(s) to produce a main stream of synthesis gas,
   wherein;
2. at least part of the main stream of synthesis gas from step 1 is subjected to a watergas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one of the synthesis gas generator(s) of step 1.

## Claims

1. A process for producing synthesis gas comprising the steps of:
1. reacting a hydrocarbon feedstock, preferably natural gas, in at least one synthesis gas generator, using at least one external heat input to said synthesis gas generator(s) to produce a main stream of synthesis gas,
**characterised in that**;
2. at least part of the main stream of synthesis gas from step 1 is subjected to a water-gas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one of the synthesis gas generator(s) of step 1.

2. A process for upgrading an existing synthesis gas plant, comprising the steps of:
1. reacting a hydrocarbon feedstock, preferably natural gas, in at least one synthesis gas generator(s), using at least one external heat input to said synthesis gas generator(s) to produce a main stream of synthesis gas,
**characterised in that**;
2. at least part of the main stream of synthesis gas from step 1 is subjected to a water-gas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one-of the synthesis gas generator(s) of step 1.

3. A process according to any of the preceding claims whereby the hydrocarbon feedstock used is natural gas.

4. A process according to any of the preceding claims whereby the nitrogen content of the hydrocarbon feedstock used is less than 40 wt %, more preferably less than 10 wt % and most preferably less than 1 wt %.

5. A process according to any of the preceding claims whereby the syngas is generated via any one, or more, of the following methods: steam reforming (SR), compact reforming (CR), partial oxidation of hydrocarbons (POX), advanced gas heated reforming (AGHR), microchannel reforming, plasma reforming, autothermal reforming (ATR) and all combinations thereof.

6. A process according to any of the preceding claims whereby the synthesis gas generator is a steam reformer.

7. A process according to any of the preceding claims invention whereby the synthesis gas is generated via at least one steam methane reformer together with at least one auto-thermal reformer wherein the said generators are preferably connected in series.

8. A process according to any of the preceding claims whereby the water gas-shift reaction of step 2 is preferably operated in one, or more, reactors which are connected in series at a pressure of between 10 and 60 BAR and at a temperature of between 190 and 500 DEG C.

9. A process according to any of the preceding claims whereby the CO2 produced is used for chemical use and/or sequestration.

10. A process according to any of the preceding claims whereby the hydrogen separated and recovered in step 3 is used in any one of a number of different downstream processes.

11. A process according to any of the preceding claims whereby the hydrogen separated and recovered in step 3 is used as the unique external heat input to the synthesis gas generator(s) of step 1 .

12. The use of synthesis gas in a Fischer-Tropsch process for conversion into hydrocarbon liquids, wherein the synthesis gas is obtained according to the following steps:
1. reacting a hydrocarbon feedstock, preferably natural gas, in at least one synthesis gas generator(s), using at least one external heat input to said synthesis gas generator(s) to produce a main stream of synthesis gas,
wherein;
2. at least part of the main stream of synthesis gas from step 1 is subjected to a water-gas shift reaction to produce a sub-stream of carbon dioxide and hydrogen,
3. separating the sub-stream of carbon dioxide and hydrogen into carbon dioxide and hydrogen, and
4. using the hydrogen recovered in step 3 as external heat input to at least one of the synthesis gas generator(s) of step 1.
